# NEUE EUROPÄISCHE PATENTSCHRIFT

(11) **EP 1 221 280 B2**
(45) Veröffentlichungstag und Bekanntmachung des Hinweises auf die Entscheidung über den Einspruch: **27.07.2011**
(45) Hinweis auf die Patenterteilung: 22.02.2006
(21) Anmeldenummer: 01130579.4
(22) Anmeldetag: 21.12.2001
(51) Int. Cl.: A01D 41/12

(54) **Überwachungseinrichtung zur Überwachung der Funktion einer Arbeitsmaschine**
Device to monitor the function of a working machine
Dispositif de surveillance de la fonction d'une machine de travail

(30) Priorität: 08.01.2001 DE 10100522
(43) Veröffentlichungstag der Anmeldung: 10.07.2002
(73) Patentinhaber: DEERE & COMPANY, Moline, Illinois 61265-8098 (US)
(72) Erfinder: Beck, Folker, Dr., Bettendorf, IA 52722 (US); Bischoff, Lutz, 66503 Dellfeld (DE)
(74) Vertreter: Holst, Sönke

(56) Entgegenhaltungen:
- EP-A- 1 044 596
- EP-A1- 0 793 939
- DE-A- 2 505 369
- FR-A- 2 040 361
- GB-A- 2 348 998
- US-A- 4 056 817
- US-A- 4 302 813
- US-A- 4 376 298
- US-A- 4 574 633
- US-A- 5 083 976
- US-A- 6 116 089
- DATABASE WPI Section PQ, Week 199216 Derwent Publications Ltd., London, GB; Class P12, AN 1992-130335 XP002195670 & SU 1 662 403 A (PENZA AGRIC INST), 15. Juli 1991 (1991-07-15)
- DATABASE WPI Section PQ, Week 198412 Derwent Publications Ltd., London, GB; Class P12, AN 1984-073300 XP002195671 & SU 1 020 047 A (LENGD AGRIC INST), 30. Mai 1983 (1983-05-30)

## Beschreibung

Die Erfindung betrifft eine selbstfahrende, angebaute oder gezogene landwirtschaftliche Arbeitsmaschine nach dem Oberbegriff des Anspruchs 1 und ein Verfahren zur Überwachung der Funktion einer selbstfahrenden, angebauten oder gezogenen landwirtschaftlichen Arbeitsmaschine nach dem Oberbegriff des Anspruchs 11.

Zum Schutz vor Umgebungseinflüssen werden landwirtschaftliche Maschinen mit immer aufwändigeren, schalldichten Kabinen ausgestattet. Auf verschiedenen Wegen wird zwar versucht, dem Bediener ein Bild über den Maschinenzustand zu geben, wie beispielsweise durch Warnanzeigen für Drehzahlen und den Hydraulikflüssigkeitsdruck. Durch die schallisolierende Kabine kann der Bediener aber die Überwachungs- und Kontrollfunktion für die Maschine schlechter als bei einer Maschine mit offenem Arbeitsplatz aufnehmen, da er eventuell von nicht korrekt arbeitenden Teilen der Maschine verursachte Geräusche weniger gut wahrnehmen kann.

In der DE 42 232 161 A wird eine Vorrichtung zur Ermittlung der Eigenschwingungen verursachenden Parameter beschrieben, die eine Hilfestellung bei der Konstruktion rotierender Arbeitsorgane bilden soll, beispielsweise von Dresch- oder Häckseltrommeln. Die zu untersuchende Trommel wird dazu an einem Dreh- oder Translationsschwinger befestigt und in Bewegung versetzt. Hier wird somit das Schwingungsverhalten der Trommeln außerhalb der Maschine untersucht, was dem Bediener der Maschine bei der Arbeit keine Unterstützung geben kann.

In der BG 33 743 ist eine Einrichtung zur physikalisch-mechanischen Untersuchung von Arbeitselementen eines Traubenpflückers beschrieben. Schwingungen des Geräts werden erfasst und auf einem Oszillographen zur Anzeige gebracht.

Außerdem ist es bekannt, Mähdrescher mit Schwingungsaufnehmern zu versehen, die Verlustkörner erfassen. Die Signale der Schwingungsaufnehmer werden ausgewertet und zur Anzeige des Verlustanteils herangezogen. Dadurch wird aber keine Überwachung beweglicher Elemente des Mähdreschers ermöglicht.

Die US 4 574 633 A beschreibt eine Überwachungseinrichtung für eine spanabhebende Werkzeugmaschine. In einem Speicher sind Geräuschverläufe für ordnungsgemäß arbeitende Werkzeuge abgelegt. Die von dem jeweils in Benutzung befindlichen Werkzeug abgegebenen Geräusche werden mittels eines Sensors erfasst und einer analogen Komparatorschaltung zugeführt, die sie mit den aus dem Speicher abgerufenen, durch einen Digital-Analogwandler in analoge Werte umgesetzten Signalverläufen des ordnungsgemäßen Werkzeugs vergleicht. Die Signalverläufe werden abhängig vom jeweils ausgewählten Werkzeug aus dem Speicher abgerufen. Der Komparator bestimmt eine Differenz der Hüllkurven der beiden Signale und im Falle eines Überschreitens eines Schwellenwerts wird ein Fehlersignal gegeben.

Die US 6 116 089 A beschreibt eine rotierende Maschine zum Fördern u. a. für Forstprodukte. Einer angetriebenen Walze ist ein Beschleunigungsmesser zugeordnet, dessen Signale einem Vergleichsschaltkreis zugeführt werden. Er vergleicht normale und aktuelle Vibrationsprofile der Maschine und gibt eine Fehlermeldung aus, wenn das gemessene Spektrum nicht mit dem normalen Spektrum übereinstimmt, was durch fehlerhafte Schweißnähte der Walze bedingt sein kann.

In der als gattungsbildend angesehenen US 5 083 976 A wird ein Feldhäcksler mit einer Häckseltrommel und mehreren Zuführwalzen beschrieben. In der Nähe der Gegenschneide ist ein Mikrofon angeordnet, dass von der Gegenschneide abgegebene Schallwellen empfängt. Das Mikrofon ist mit einer elektronischen Steuereinheit mit einem Mikroprozessor verbunden, die wiederum einen Verstellantrieb der Gegenschneide ansteuert und einen eventuellen Kontakt der Gegenschneide mit der Häckseltrommel anhand der Signale des Mikrofons erkennt. Außerdem können das Mikrofon und die Steuereinheit beim Erntevorgang dazu dienen, eventuell gegen die Zuführwalze prallende Steine zu erkennen und in einem derartigen Fall die Zuführwalze selbsttätig anzuhalten. Ob eine Gegenschneidenverstellung oder ein Erntevorgang stattfindet, erkennt die Steuereinheit anhand der Stellung eines Schalters.

Die US 4 302 813 A beschreibt eine Überwachungsvorrichtung einer großen rotierenden Maschine in Form einer Dampfturbine und eines daran angeschlossenen Generators. Die Drehzahlen und Vibrationen werden erfasst und dienen zur selbsttätigen Erkennung eventueller unerwünschter Vibrationen und einer daran angepassten Steuerung des Hochfahrens der Dampfturbine.

Die EP 0 793 939 A bezieht sich auf einen Geschirrspüler mit einem akustischen Sensor, dessen Ausgangssignal mit einem Prozessor unter anderem daraufhin untersucht wird, ob Wasser einläuft und sich ein Sprüharm korrekt dreht. Abhängig von den erfassen Geräuschen wird der Geschirrspüler selbsttätig gesteuert

Die GB 2 348 998 A beschreibt ein Alarmsystem für landwirtschaftliche Maschinen, das auf einer Erfassung von Geräuschen und einer Wiedergabe der Geräusche in der Kabine basiert. Es wird auch vorgeschlagen, Fehler anhand von Drehzahlmessungen oder anderen Sensoren zu erkennen und vom jeweiligen Fehler abhängige akustische Signale abzugeben.

Die der Erfindung zugrunde liegende Aufgabe wird darin gesehen, eine verbesserte Einrichtung zur Überwachung der Funktion einer landwirtschaftlichen Arbeitsmaschine zur Verfügung zu stellen, die eine frühzeitige Erkennung von Fehlern ermöglicht.

Diese Aufgabe wird erfindungsgemäß durch die Lehre der Patentansprüche 1 und 11 gelöst, wobei in den weiteren Patentansprüchen Merkmale aufgeführt sind, die die Lösung in vorteilhafter Weise weiterentwickeln.

Eine landwirtschaftliche Arbeitsmaschine ist mit einer Rechnereinrichtung ausgestattet, die von wenigstens einem Sensor mit einem Signal versorgt wird, das eine Information über ein Geräusch enthält, das durch die Bewegung bzw. Schwingung eines Elements der Arbeitsmaschine verursacht wird. Die Rechnereinrichtung verwendet das Signal und einen Vergleichswert, um einen Signalwert bereitzustellen, der eine Information darüber enthält, ob die Arbeitsmaschine korrekt arbeitet, oder ob ein Fehler vorliegt. Die Rechnereinrichtung ist betreibbar, das von dem wenigstens einem Sensor bereitgestellte Signal einem Element der Arbeitsmaschine zuzuordnen. Sie ist eingerichtet, eine Fehlermeldung abzugeben, falls das Signal des Sensors auf einen Fehler der Arbeitsmaschine hindeutet. Eine Fehlermeldung kann abgegeben werden, wenn ein aus dem Signal des Sensors abgeleiteter Parameter außerhalb eines bestimmten Intervalls um den Vergleichswert des Parameters liegt, insbesondere um einen Betrag vom Vergleichswert abweicht, der größer als ein Schwellenwert ist. Der Parameter ist insbesondere die Frequenz und/oder Amplitude einer Schwingung. Es wird somit nicht unbedingt nur ein Fehlersignal abgegeben, wenn eine Schwingung um einen ersten Schwellenwert stärker als vorgesehen ist, sondern auch um einen zweiten (gegebenenfalls vom ersten Schwellenwert verschiedenen) Schwellenwert schwächer ist, denn eine zu schwache, vom Sensor erfasste Schwingung kann auch einen Hinweis auf einen Fehler enthalten. Auf diese Weise lassen sich auch Verschiebungen in Eigenfrequenzen von Bauteilen oder Baugruppen feststellen, die aus einer fehlerhaften, veränderten Bauteilstruktur resultieren. Einem Element wird bei näherungsweise bekannter Bewegungsfrequenz das Signal eines Sensors zugeordnet. Die Rechnereinrichtung ermittelt anhand der Frequenz eines Signalanteils dessen Quelle, und ordnet diesen Signalanteil dem jeweiligen Element zu. Im Fehlerfall ist das Element somit leicht nachweis- und zur Anzeige bringbar. Dem Element ist ein Drehzahlsensor zugeordnet, der die Drehfrequenz des Elements erfasst. Derartige Drehzahlsensoren werden in modernen Arbeitsmaschinen bei wichtigeren Bauteilen standardmäßig elektronisch gemessen. Vom Datenbus kann daher schon ein Teil der benötigten Informationen gelesen werden. Davon ausgehend sind über die bekannten Übersetzungsverhältnisse im gesamten Antriebssystem die Drehzahlen oder Bewegungsfrequenzen aller vorhergehenden und folgenden beweglichen Baugruppen bekannt. Bei der Berechnung kann der Schlupf mit berechnet werden. Wenn notwendig, können oder müssen zusätzliche Drehzahlsensoren installiert werden. Das Signal des Drehzahlsensors wird der Rechnereinrichtung zugeführt, die dem Element die Signalanteile des Bewegungs- und/oder Schwingungssensors zuordnet, die mit der vom Drehzahlsensor gemessenen Drehfrequenz korrelieren.

Obwohl bei sich im Frühstadium befindlichen Schäden die Funktion der Bauteile noch gewährleistet ist und daher durch die üblicherweise vorhandene Sensorik der Schaden nicht erkannt wird, sind sie oft durch ungewöhnliche Geräusche erkennbar. Ein sensibles Ohr kann sie als kratzende, knackende, schlagende, pfeifende, brummende oder dröhnende Geräusche aus dem normalen Geräuschspektrum der Maschine heraus erkennen. Diese Geräusche werden dadurch verursacht, dass die geschädigten Teile nicht mehr ordnungsgemäß in ihren Bewegungsbahnen geführt werden oder sogar davon abweichen. Dadurch können Bauteile zu ungewollten Vibrationen angeregt werden, verschiedene Baugruppen in ungewollter Weise aneinander reiben oder schlagen, aber auch andere Bauteile und -gruppen zu ungewollten Schwingungen anregen. Es ist auch möglich, dass auf diese Weise Bauteile zu Resonanzschwingungen angeregt werden, die mit dem geschädigten Teil nicht unmittelbar mechanisch verbunden sind.

Die Überwachungseinrichtung ersetzt gleichsam das Ohr des sich in der schallisolierten Kabine befindlichen Bedieners. Auf diese Weise können Hinweise auf Verschleiß oder Risse, ungenügende Schmierung von Lagerstellen, defekte Lager, Brüche oder Deformierungen von Bauteilen, gelöste oder gebrochene Schraub-, Schweißverbindungen oder andere Verbindungen oder Unwuchten in beweglichen Elementen der Arbeitsmaschine bereits in einem sehr frühen Stadium gewonnen werden. Sich lockernde Verbindungen, wie Schrauben und Muttern, führen zu Veränderungen des Schwingungsverhaltens, und entsprechende Maßnahmen können anhand des von der Rechnereinrichtung bereitgestellten Signalwerts eingeleitet werden, noch bevor ein Schaden eintritt.

Es wäre denkbar, das Signal des Sensors und den Vergleichswert zur Erzeugung des Signalwerts zu verwenden; insbesondere zur Verminderung der benötigten Rechenkapazität der Rechnereinrichtung ist aber bevorzugt, aus dem Signal des Sensors einen Parameter abzuleiten, der mit dem Vergleichswert zur Erzeugung des Signalwerts dient. Vorzugsweise wird ein Vergleich zwischen dem Signal (oder einem daraus abgeleiteten Parameter) und dem Vergleichswert durchgeführt. Es sind aber auch andere mathematische Operationen zur Erzeugung des Signalwerts anwendbar.

Der Sensor ist derart angeordnet, dass er das Geräusch erfasst, das durch die Bewegung und/oder Schwingung eines angetriebenen Elements der Arbeitsmaschine erzeugt wird. Er kann somit direkt mit dem angetriebenen Element zusammenwirken, und auf beliebige Weise seine Geräusche erfassen, beispielsweise mechanisch, optisch oder induktiv. Das angetriebene Element ist vorzugsweise ein Gutförderelement und/oder ein Gutbearbeitungselement, z. B. eine Häcksel- oder Dreschtrommel. Alternativ oder zusätzlich kann derselbe oder ein anderer Sensor auch Geräusche eines angetriebenen oder nicht angetriebenen Elements, z. B. des Siebkastens, einer Seitenwand eines Mähdreschers oder eines tragenden Elements, erfassen. Ein derartiges Element erzeugt im Fehlerfall andere Geräusche als im Normalfall, welche durch den Sensor nachgewiesen werden können.

Da die Übertragung akustischer Schwingungen eng verbunden mit mechanischen Schwingungen ist, kann für die direkte oder indirekte Signalaufnahme jede Art von Sensor oder Sensoren verwendet werden, die zur Aufnahme von Körperschall, Luftschall, mechanischen Schwingungen oder irgendeiner anderen direkt oder indirekt mit diesen Schwingungen zusammenhängenden physikalischen Größe geeignet ist oder sind, wie zum Beispiel ein- oder mehrdimensionale Beschleunigungsaufnehmer, Körperund/oder Luftschallmikrofone. Als Sensor wird somit vorzugsweise ein akustischer Sensor (Mikrofon) oder ein Bewegungssensor (Schwingungsaufnehmer, z. B. Körperschallsensor) verwendet, der eine Information über die auf ihn wirkende Beschleunigung bzw. seine Geschwindigkeit oder Lage liefert. Aber auch alle Formen von Sensoren für Druck- und/oder Zugspannungen und/oder Vibrationen sind verwendbar.

Um die einzelnen bewegten Teile der Maschine zu überwachen, wäre es angebracht, alle diese Elemente mit geeigneten Sensoren und Kontrolleinrichtungen auszustatten. Das ist durchaus möglich, würde aber eindeutig einen recht hohen technischen Aufwand darstellen. Die besten Ergebnisse können erreicht werden, wenn eine Reihe von Sensoren in der Nähe von Lagerstellen der kritischsten und/oder wichtigsten Baugruppen angeordnet werden. Um aber den Aufwand zu reduzieren, wird eine möglichst geringe Anzahl an Sensoren angestrebt. Günstige Positionen für diese Sensoren sind dann Knotenstellen, an denen Kräfte möglichst vieler zu überwachender beweglicher Baugruppen zusammenlaufen. Das können z. B. Knoten im Tragwerksystem des Rahmens sein. Aber auch die Anordnung eines Luftschallmikrofons in einem zentralen Bereich ist möglich. Ebenso könnten mehrere Mikrofone um die Maschine verteilt werden (z. B. vorn links, vorn rechts, hinten links, hinten rechts). Die genaue Positionierung der Sensoren oder des Sensors kann nicht allgemein vorgegeben werden. Sie ist abhängig von der jeweiligen Struktur der Maschine und muss für jeden Maschinentyp speziell ermittelt werden.

Der Sensor kann somit vom zu überwachenden Element beabstandet an der Arbeitsmaschine angeordnet sein, wobei die akustische Schwingung des Elements akustisch oder mechanisch auf den Sensor übertragen wird, beispielsweise durch das Fahrgestell oder andere das zu überwachende Element tragende oder damit direkt oder indirekt mechanisch verbundene Teile der Arbeitsmaschine.

Anstelle nur einen oder mehrere diskrete Parameter zu berechnen und mit dem Vergleichswert oder Vergleichswerten zu vergleichen, kann auch eine Information über die Bewegung des Elements, die über eine bestimmte Zeit aufgenommen wurde, oder ein durch Fourier-Analyse daraus errechnetes Frequenzspektrum mit einem Vergleichswert verglichen werden. Bei Abweichungen zwischen der Information über die Bewegung bzw. dem Frequenzspektrum und dem Vergleichswert wird eine Fehlermeldung abgegeben.

Es muss sich bei den Vergleichswerten nicht unbedingt um Werte einer fehlerfreien Arbeitsmaschine handeln, da auch denkbar ist, Werte abzuspeichern, die einer Arbeitsmaschine mit einem bekannten Defekt entsprechen. In diesem Fall kann ein Fehler leicht identifiziert werden. Selbstverständlich ist auch möglich, die vom Sensor gemessenen Werte (oder daraus abgeleitete Parameter) mit mehreren Vergleichswerten, die Arbeitsmaschinen mit bekannten Fehlern entsprechen, zu vergleichen.

Die Zuordnung eines Signals zu einem Element kann in der Weise geschehen, dass das jeweilige Element anhand der Position eines Sensors ermittelt wird, wenn letzterer eingerichtet ist, nur die Bewegung eines einzigen Elements zu erfassen. So kann ein geeigneter Bewegungssensor die Bewegung nur eines Rotationsförderers oder einer Gutbearbeitungstrommel erfassen.

Es wäre auch denkbar, den gemessenen Parameter mit einem oder mehreren Parametern zu vergleichen, die Arbeitsmaschinen mit bestimmten Fehlern entsprechen, also als Vergleichswert den Wert einer defekten Maschine zu verwenden. Beispielsweise könnte ein bei einer defekten Lagerung gemessener, abgespeicherter Parameter mit dem gemessenen Parameter verglichen werden, was einen unproblematischen Nachweis einer defekten Lagerung erlaubt. Auch bei einer Ausführungsform, bei der eine über einen bestimmten Zeitraum erfasste Bewegung oder ein Frequenzspektrum mit einem Vergleichswert erfolgt, kann ein Vergleich mit Vergleichswerten erfolgen, die defekten Maschinen mit bestimmten Fehlern entsprechen, was eine einfache und schnelle Erkennung des Fehlers erlaubt.

Nachdem die Rechnereinrichtung ermittelt hat, welchem Element der Arbeitsmaschine ein Fehler zugeordnet werden kann, erfolgt bevorzugt mittels einer Anzeigeeinrichtung eine entsprechende Fehlermeldung, wobei das als fehlerhaft erkannte Element dem Bediener z. B. durch Piktogramme, akustische Signale oder Schriftzeichen angezeigt wird.

Auch wenn man die Fehlerursache nicht immer bis ins letzte Detail lokalisieren kann, kann dem Bediener zumindest ein Hinweis auf den Fehler gegeben werden. Als Weiterführung einer einfachen Fehleranzeige wäre eine Art Online-Hilfe möglich, bei der der Bediener ausgehend von den automatisch erhaltenen Informationen mögliche Quellen und verschiedene Schritte zur weiteren Fehlersuche bis hin zu Hilfen zur Reparatur vorgeschlagen bekommt. Dieses von Handbüchern auf den Bordcomputer übertragene Prinzip könnte die Grenzen der automatischen Fehlerlokalisierung weiter ausdehnen und die Fehlersuche für den Fahrer wesentlich vereinfachen.

Der Vergleichswert des Signals (oder eines Parameters des Signals) kann fest abgespeichert sein, z. B. in einem ROM abgelegt. Da sich die von einer Arbeitsmaschine abgegebenen Geräusche aber über ihre Lebenszeit verändern können, und häufig auch von der Art des verarbeiteten Guts abhängen, kann ein statischer Vergleichswert zu unrichtigen Fehlermeldungen führen. Neue Maschinen sind nicht identisch, wenn sie vom Band laufen. Maßtoleranzen von Bauteilen, Toleranzen in den Anzugsmomenten von Verschraubungen, Materialtoleranzen und vieles mehr verursachen Unterschiede im Sollgeräusch einer neuwertigen Maschine. Es ist daher bevorzugt, die Signale von den Sensoren bei einer fehlerfreien (insbesondere bei der jeweiligen) Maschine beispielsweise zu Beginn eines Arbeitsvorgangs aufzunehmen und als Vergleichswert in einem mit der Rechnereinheit verbundenen Speicher abzulegen. Die Rechnereinheit kann auch ein neuronales Netzwerk umfassen, das in der Lage ist, selbst zu erlernen, wie das Spektrum einer einwandfrei arbeitenden Arbeitsmaschine aussieht. Die Sensoren können auch die Qualitätskontrolle bei der Fertigung unterstützen.

Die Überwachungseinrichtung muss nicht unbedingt immer aktiv sein und die Arbeitsmaschine auf Schäden überwachen. Es kann auch ausreichen, wenn sie das Geräuschspektrum der Arbeitsmaschine gelegentlich analysiert, zum Beispiel beim Wenden am Ende eines Felds. Die Überwachungseinrichtung kann in dieser Ausführungsform mittels einer (in der Regel vorhandenen) Einrichtung zur Erfassung der Position der Arbeitsmaschine verbunden werden, beispielsweise einer GPS-Einrichtung.

Die Überwachungseinrichtung wird an landwirtschaftlichen Arbeitsmaschinen verwendet. Beispielsweise seien selbstfahrende Arbeitsmaschinen, wie Traktoren, Mähdrescher, Feldhäcksler und Baumwollpflücker genannt. Sie kann aber auch an gezogenen oder angebauten Arbeitsmaschinen Verwendung finden, zum Beispiel an Erntevorsätzen wie Maispflückern, Maisgebissen oder Schneidwerken. Auch Düngerstreuer und angebaute, gezogene oder selbstfahrende Sprühfahrzeuge können mit der überwachungseinrichtung ausgerüstet werden.

In den Zeichnungen ist ein nachfolgend näher beschriebenes Ausführungsbeispiel der Erfindung dargestellt. Es zeigt:
- Fig. 1: eine halbschematische Seitenansicht eines landwirtschaftlichen Axialmähdreschers,
- Fig. 2: ein Flussdiagram der Überwachungseinrichtung des Mähdreschers, das ein nicht unter die Ansprüche fallendes Ausführungsbeispiel zeigt,
- Fig. 3: ein Beispiel für von einem Sensor aufgenommene Signale, und
- Fig. 4: ein Beispiel eines aus den Signalen der Figur 3 errechneten Frequenzspektrums.

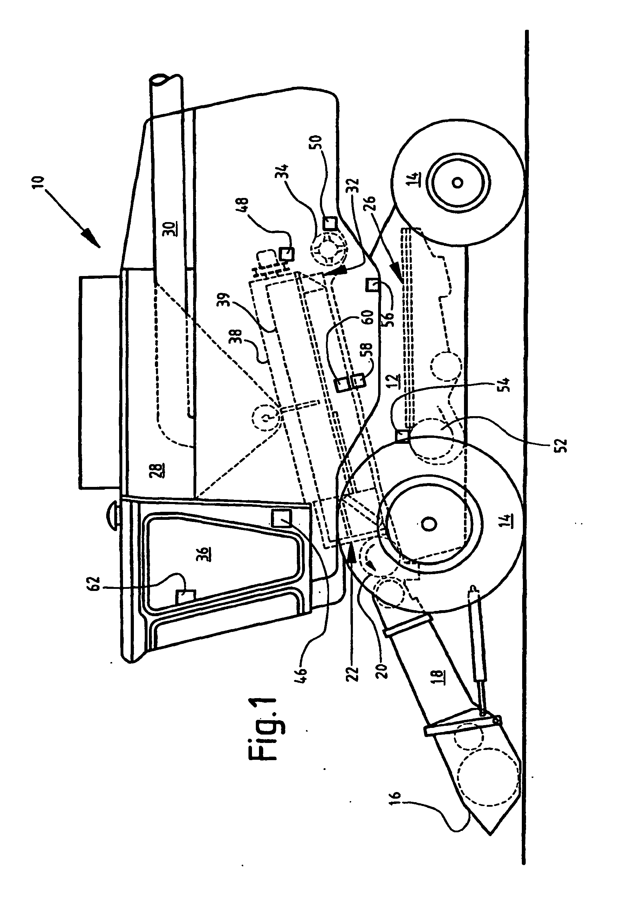

Figur 1 zeigt einen landwirtschaftlichen Mähdrescher 10 mit einem Fahrgestell 12 und sich von diesem erstreckenden Bodenlaufrädern 14, an dessen Beispiel die Erfindung erläutert wird. Eine Erntegutbergungsvorrichtung 16 in Form eines Schneidwerks wird verwendet, Erntegut aufzunehmen und es einem Schrägförderer 18 zuzuführen. Das Erntegut wird vom Schrägförderer 18 einer Leittrommel 20 zugeführt. Die Leittrommel 20 leitet das Erntegut nach oben durch einen Einlassübergangsbereich 22 an eine Axialtrennvorrichtung 24 weiter.

Die Axialtrennvorrichtung 24 drischt und trennt das geerntete Gut. Korn und Spreu fallen durch Roste am Boden der Axialtrennvorrichtung 24 in ein Reinigungssystem 26. Das Reinigungssystem 26 entfernt die Spreu und führt das saubere Korn einem (nicht gezeigten) Kornelevator zu. Der Kornelevator legt das saubere Korn in einem Korntank 28 ab. Das saubere Korn im Korntank 28 kann durch eine Entladeschnecke 30 in einen Anhänger oder Lastwagen entladen werden. Gedroschenes, vom Korn befreites Stroh wird aus der Axialtrennvorrichtung 24 durch einen Auslass 32 heraus zu einer Abgabetrommel 34 geführt. Die Axialtrennvorrichtung 24 umfasst ein zylindrisches Rotorgehäuse 38 und einen im Rotorgehäuse 38 angeordneten Rotor 39. Die Abgabetrommel 34 wirft das Stroh am rückwärtigen Ende des Mähdreschers 10 aus.

Die Bedienung des Mähdreschers 10 erfolgt von einer Fahrerkabine 36 aus. In der Fahrerkabine 36 ist auch eine Rechnereinrichtung 46 angeordnet, die mit verschiedenen Sensoren verbunden ist:

Ein Sensor 48 ist an der Axialtrennvorrichtung 24 angebracht und erfasst Schwingungen des Rotorgehäuses 38. In der Nähe der Abgabetrommel 34 ist am Fahrgestell 12 ein Sensor 50 befestigt, der von ihr verursachte Schwingungen der sie tragenden Teile des Fahrgestells 12 erfasst. In der Nähe eines Ventilators 52 der Reinigungseinrichtung ist am Fahrgestell 12 ein Sensor 54 angeordnet. Ein Drehzahlsensor 58 erfasst die Drehzahl des Rotors 39 induktiv durch einen am Rotor 39 angebrachten Permanentmagneten 60. Ein Sensor 56 ist oberhalb des Reinigungssystems.26 am Fahrgestell 12 angebracht. Die Sensoren 48, 50, 54 und 56 sind an sich bekannte Sensoren, die zur Erzeugung von Signalen eingerichtet sind, die eine Information über die von den Sensoren 48, 50, 54 und 56 aufgenommenen Schallwellen enthalten. Es kann sich insbesondere um akustische oder Beschleunigungs-Sensoren handeln.

Der Sensor 48 stellt aufgrund seiner Lage primär (hauptsächlich) eine Information über die Bewegung des Rotorgehäuses 38 und somit durch vom drehenden Rotor 39 verursachte Schwingungen bereit. Analog stellt der Sensor 50 primär eine Information über von der Abgabetrommel 34 verursachte Schwingungen des Fahrgestells 12 bereit. Der Sensor 54 stellt primär Informationen über die vom Ventilator 52 verursachten Schwingungen bereit. Der Sensor 56 stellt eine Information über die Schwingungen des Fahrgestells bereit, die von allen beweglichen Elementen des Mähdreschers 10 verursacht werden.

Die Sensoren 48, 50, 54, 56 und 58 sind elektrisch (oder optisch), vorzugsweise über eine Busleitung, mit der Rechnereinrichtung 46 verbunden. Die Rechnereinrichtung 46 digitalisiert die analogen Signale der Sensoren, wertet sie aus und gibt dem Bediener in der Fahrerkabine 36 auf einer Anzeigeeinrichtung 62 eine Fehlermeldung, wenn aus den Signalen ein Fehler des Mähdreschers 10 erkennbar ist.

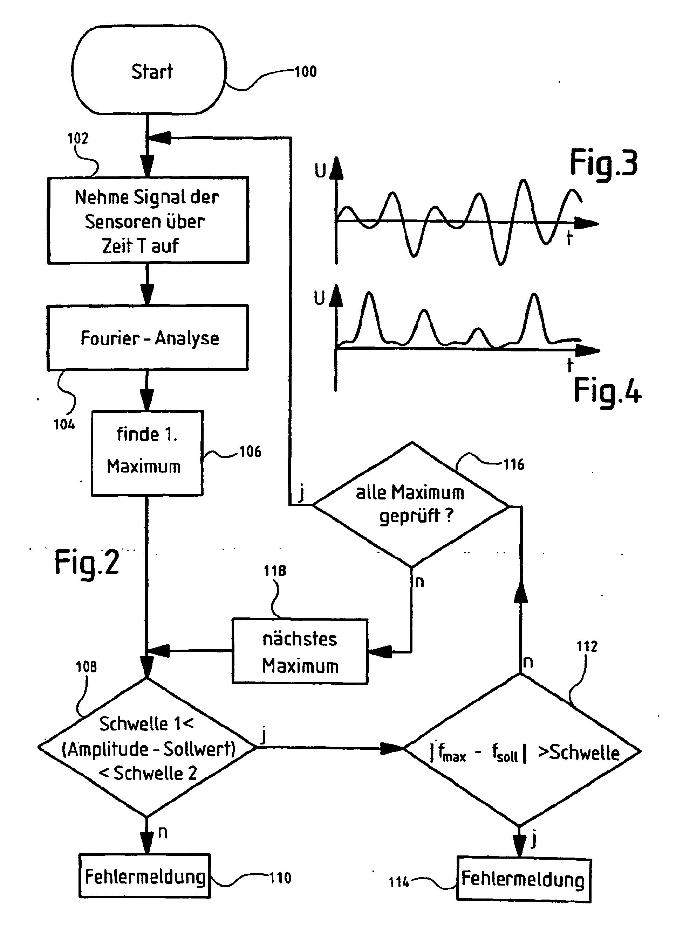

Eine mögliche Arbeitsweise der Rechnereinrichtung 46 ist in Figur 2 dargestellt. Nach dem Start in Schritt 100 werden im Schritt 102 die Signale der Sensoren 48, 50, 54, 56 und 58 über eine bestimmte Zeit T aufgenommen, beispielsweise über 10 Sekunden. Dabei wird der Spannungsverlauf der von den Sensoren 48, 50, 54, 56 und 58 gelieferten Signale von der Rechnereinrichtung als Funktion der Zeit abgespeichert. Als Beispiel kann sich der in Figur 3 dargestellte Kurvenverlauf ergeben, bei dem das Sensorsignal über die Zeit dargestellt ist.

In Schritt 104 wird aus den abgespeicherten, von den Sensoren 48, 50, 54, 56 und 58 gelieferten Signalwerten durch eine Fourier-Analyse oder -Transformation ein Frequenzspektrum errechnet. Unterschiedlichen Frequenzen wird ein Amplitudenwert zugeordnet, wobei auch negative, eine Phaseninformation beinhaltende Frequenzwerte möglich sind. Ein derartiges Frequenzspektrum ist in Figur 4 angedeutet.

Bei bestimmten Frequenzen sind Maxima der Amplituden nachweisbar, wie in Figur 4 erkennbar. Die Breite der Maxima ist in der Regel von der Zeit T abhängig; sie wird um so geringer, je länger T ist. Die einzelnen Maxima lassen sich den Bewegungen und/oder Schwingungen der Elemente des Mähdreschers 10 zuordnen. Die Drehfrequenz des Rotors 39 kann die Rechnereinrichtung durch die Signale des Drehzahlsensors 58 unproblematisch ermitteln. Signale mit Komponenten, deren Frequenz bei Vielfachen der Drehfrequenz des Rotors 39 liegen, können somit dem Rotor 39 zugeordnet werden. Den übrigen Elementen des Mähdreschers 10 lassen sich die Komponenten über ihre wenigstens näherungsweise bekannten Frequenzen und/oder durch die Lage des jeweiligen Sensors zuordnen. Der Rechnereinrichtung 46 liegen nach Schritt 104 somit Frequenzspektren der vier Sensoren 48, 50, 54 und 56 vor, die nacheinander untersucht werden. Zwischen den durch periodische Bewegungen der Gutförder- und Gutbearbeitungselemente des Mähdreschers 10 bedingten Maxima ist ein stochastischer Untergrund vorhanden, der zumindest teilweise durch den Materialfluss bedingt ist. Die Signale der Sensoren 48, 50, 54 und 56 lassen sich somit in periodische, durch die Maschine (Mähdrescher 10) bedingte Anteile und in stochastische, durch den Gutfluss bedingte Anteile aufteilen, die auf diese Weise unterscheidbar und separat analysierbar sind.

In Figur 2 ist zur Vereinfachung nur die Untersuchung eines einzelnen Frequenzspektrums wiedergegeben, z. B. die des Sensors 56. Die Frequenzspektren der anderen Sensoren werden in analoger Weise untersucht.

In Schritt 106 wird das erste Maximum des Frequenzspektrums gesucht. Dann folgt Schritt 108, in dem untersucht wird, ob die Differenz zwischen der Amplitude des Maximums und einem abgespeicherten Vergleichswert größer als ein erster festgelegter, abgespeicherter Schwellenwert (Schwelle 1) ist. Der erste Schwellenwert ist negativ. Es wird also abgefragt, ob die Schwingungsamplitude wesentlich größer als der Vergleichswert ist. Gleichzeitig wird abgefragt, ob die Differenz zwischen der Amplitude des Maximums und einem abgespeicherten Vergleichswert kleiner als ein zweiter abgespeicherter Schwellenwert (Schwelle 2) ist. Ist die Amplitude abzüglich des Sollwerts größer als der zweite Schwellenwert, deutet das auf zu große Schwingungen hin, ist die Amplitude abzüglich des Sollwerts kleiner als der erste Schwellenwert, spricht das für einen nicht ordnungsgemäßen Antrieb des Elements, was z. B. durch einen defekten Treibriemen verursacht sein kann. In beiden Fällen wird in Schritt 110 eine Fehlermeldung abgegeben.

Falls Schritt 108 ergibt, dass die Amplitude im Sollbereich liegt, folgt Schritt 112, in dem untersucht wird, ob der Absolutbetrag der Differenz zwischen der Frequenz des Maximums (fₘₐₓ) und einer abgespeicherten Sollfrequenz (fₛₒₗₗ) größer als ein Schwellenwert ist. Falls die tatsächliche Frequenz zu weit von der Sollfrequenz abweicht, könnte ein Fehler vorliegen, so dass in Schritt 114 ebenfalls eine Fehlermeldung abgegeben wird. Anhand der Lage des Maximums und/oder der Position des Sensors, von dem das die Fehlermeldung verursachende Frequenzspektrum stammt, kann in Schritt 110 und Schritt 114 auf der Anzeigeeinrichtung 62 ein Hinweis gegeben werden, bei welchem Element des Mähdreschers 10 ein Fehler vorliegen kann. Auch in Schritt 112 könnte ein unterer und ein oberer, vom unteren verschiedener Schwellenwert für den erlaubten Bereich der Abweichung von der Sollfrequenz verwendet werden, analog Schritt 108.

Bei einer zu großen Breite der Maxima könnte ebenfalls eine Fehlermeldung abgegeben werden, da sie für einen Fehler durch eine ungleichmäßige Bewegung der Elemente oder einen fehlerhaften Antrieb spricht.

Ergibt Schritt 112, dass die Frequenz des Maximums zumindest etwa näherungsweise mit dem Vergleichswert übereinstimmt, folgt Schritt 116, in dem abgefragt wird, ob alle Maxima überprüft wurden. Ist das der Fall, folgt wieder Schritt 102. Anderenfalls folgt Schritt 118, in dem das nächste Maximum gesucht wird, auf den wieder Schritt 108 folgt.

Im Ergebnis ermöglicht die aus den Sensoren 48, 50, 52, 54 und 58 und der Rechnereinrichtung 46 aufgebaute Überwachungseinrichtung eine einfache Überwachung des Mähdreschers 10 auf sich nicht erwartungsgemäß bewegende Elemente und somit eine frühzeitige Erkennung eventueller Fehler.

## Patentansprüche

1. Selbstfahrende, angebaute oder gezogene landwirtschaftliche Arbeitsmaschine (10) mit mindestens einem rotierend angetriebenen Element (39) und einer Überwachungseinrichtung zur Überwachung der Funktion der Arbeitsmaschine (10), wobei die Überwachungseinrichtung mindestens einen Sensor (48, 50, 54, 56), der zur Bereitstellung eines Signals eingerichtet ist, das eine Information über ein Geräusch enthält, das von dem angetriebenen Element der Arbeitsmaschine (10) verursacht wird, und eine das Signal des Sensors (48, 50, 54, 56) empfangende Rechnereinrichtung (46) aufweist, die betreibbar ist, das von wenigstens einem der Sensoren (48, 50, 54, 56) bereitgestellte Signal einem Element der Arbeitsmaschine (10) zuzuordnen und anhand des vom Sensor (48, 50, 54, 56) bereitgestellten Signals und eines Vergleichswerts einen Signalwert zu erzeugen, **dadurch gekennzeichnet, dass** die Rechnereinrichtung (46) Signale von einem Drehzahlsensor (58) erhält, der dem rotierenden Element (39) der Arbeitsmaschine (10) zugeordnet ist, dass die Rechnereinrichtung (46) ein mit der vom Drehzahlsensor (58) gemessenen Drehzahl korreliertes Signal dem rotierenden Element (39) zuordnet, und dass die Rechnereinrichtung (46) betreibbar ist, bei einer über einem Schwellenwert liegenden Abweichung eines Parameters des Signals des Sensors (48, 50, 54, 56) von dem Vergleichswert eine Fehleranzeige abzugeben.

2. Arbeitsmaschine (10) nach Anspruch 1, **dadurch gekennzeichnet, dass** das angetriebene Element ein Gutbearbeitungs- und/oder Gutförderelement ist.

3. Arbeitsmaschine (10) nach Anspruch 1 oder 2, **dadurch gekennzeichnet, dass** der Sensor (48, 50, 54, 56) ein akustischer Sensor oder ein Bewegungssensor ist.

4. Arbeitsmaschine (10) nach einem der Ansprüche 1 bis 3, **dadurch gekennzeichnet, dass** der Sensor (48, 50, 54, 56) an einem direkt oder indirekt mechanisch mit dem Element verbundenen Teil der landwirtschaftlichen Arbeitsmaschine (10) angebracht ist, wobei Geräusche und/oder Bewegungen und/oder Schwingungen des Elements akustisch und/oder mechanisch auf den Sensor übertragen werden.

5. Arbeitsmaschine (10) nach einem der Ansprüche 1 bis 4, **dadurch gekennzeichnet, dass** die Rechnereinrichtung (46) betreibbar ist, bei einer über einem Schwellenwert liegenden Abweichung der Frequenz und/oder der Amplitude des Signals des Sensors (48, 50, 54, 56) von dem Vergleichswert eine Fehleranzeige abzugeben.

6. Arbeitsmaschine (10) nach einem der Ansprüche 1 bis 5, **dadurch gekennzeichnet, dass** der Vergleichswert einer einwandfreien Arbeitsmaschine (10) entspricht.

7. Arbeitsmaschine (10) nach einem der Ansprüche 1 bis 6, **dadurch gekennzeichnet, dass** der Vergleichswert einer fehlerhaften Arbeitsmaschine (10) entspricht.

8. Überwachungseinrichtung nach einem der Ansprüche 1 bis 7, **dadurch gekennzeichnet, dass** die Rechnereinrichtung (46) betreibbar ist, das Signal dem jeweiligen Element der Arbeitsmaschine (10) anhand der Position des Sensors (48, 50, 54, 56) zuzuordnen.

9. Arbeitsmaschine (10) nach einem der Ansprüche 1 bis 8, **dadurch gekennzeichnet, dass** die Rechnereinrichtung (46) betreibbar ist, eine Information auszugeben, welchem Element ein Fehler zuzuordnen ist.

10. Arbeitsmaschine (10) nach einem der Ansprüche 1 bis 9, **dadurch gekennzeichnet, dass** die Vergleichswerte der Signale vom Sensor (48, 50, 54, 56) aufgenommen und durch die Rechnereinrichtung (46) abspeicherbar sind.

11. Verfahren zur Überwachung der Funktion einer selbstfahrenden, angebauten oder gezogenen landwirtschaftlichen Arbeitsmaschine (10), mit mindestens einem Sensor (48, 50, 54, 56), der ein Signal bereitstellt, das eine Information über ein Geräusch enthält, das von einem rotierend angetriebenen Element der Arbeitsmaschine (10) verursacht wird, und mit einer das Signal des Sensors (48, 50, 54, 56) empfangenden Rechnereinrichtung (46), die das von wenigstens einem der Sensoren (48, 50, 54, 56) bereitgestellte Signal einem Element der Arbeitsmaschine (10) zuordnet und anhand des vom Sensor (48, 50, 54, 56) bereitgestellten Signals und eines Vergleichswerts einen Signalwert erzeugt, **dadurch gekennzeichnet, dass** die Rechnereinrichtung (46) Signale von einem Drehzahlsensor (58) erhält, der dem rotierenden Element (39) der Arbeitsmaschine (10) zugeordnet ist, dass die Rechnereinrichtung (46) ein mit der vom Drehzahlsensor (58) gemessenen Drehzahl korreliertes Signal dem rotierenden Element (39) zuordnet, und dass die Rechnereinrichtung (46) bei einer über einem Schwellenwert liegenden Abweichung eines Parameters des Signals des Sensors (48, 50, 54, 56) von dem Vergleichswert eine Fehleranzeige abgibt.

## Claims

1. Attached or towed automotive agricultural machine (10) having at least one element (39) which is driven in rotation and a monitoring device for monitoring the function of the machine (10), wherein the monitoring device has at least one sensor (48, 50, 54, 56) which is designed to make available a signal which contains information about a noise which is caused by the driven element of the machine (10), and a computer device (46) which receives the signal of the sensor (48, 50, 54, 56) and which can be operated to assign the signal made available by at least one of the sensors (48, 50, 54, 56) to an element of the machine (10) and to generate a signal value on the basis of the signal made available by the sensor (48, 50, 54, 56) and a comparison value, **characterized in that** the computer device (46) receives signals from a rotational speed sensor (58) which is assigned to the rotating element (39) of the machine (10), **in that** the computer device (46) assigns a signal correlated to the rotational speed measured by the rotational speed sensor (58) to the rotating element (39), and **in that** the computer device (46) can be operated to output a fault indication in the event of a deviation of a parameter of the signal of the sensor (48, 50, 54, 56) from the comparison value by more than a threshold value.

2. Machine (10) according to Claim 1, **characterized in that** the driven element is a material processing element and/or material conveying element.

3. Machine (10) according to Claim 1 or 2, **characterized in that** the sensor (48, 50, 54, 56) is an acoustic sensor or a movement sensor.

4. Machine (10) according to one of Claims 1 to 3, **characterized in that** the sensor (48, 50, 54, 56) is attached to a part of the agricultural machine (10) which is directly or indirectly mechanically connected to the element, wherein noises and/or movement and/or vibrations of the element are transmitted acoustically and/or mechanically to the sensor.

5. Machine (10) according to one of Claims 1 to 4, **characterized in that** the computer device (46) can be operated to output a fault indication in the event of a deviation of the frequency and/or of the amplitude of the signal of the sensor (48, 50, 54, 56) from the comparison value by more than a threshold value.

6. Machine (10) according to one of Claims 1 to 5, **characterized in that** the comparison value corresponds to a satisfactory machine (10).

7. Machine (10) according to one of Claims 1 to 6, **characterized in that** the comparison value corresponds to a faulty machine (10).

8. Monitoring device according to one of Claims 1 to 7, **characterized in that** the computer device (46) can be operated to assign the signal to the respective element of the machine (10) on the basis of the position of the sensor (48, 50, 54, 56).

9. Machine (10) according to one of Claims 1 to 8, **characterized in that** the computer device (46) can be operated to output information indicating which element a fault is to be assigned to.

10. Machine (10) according to one of Claims 1 to 9, **characterized in that** the comparison values of the signals are picked up by the sensor (48, 50, 54, 56) and can be stored by the computer device (46).

11. Method for monitoring the function of an automotive, attached or towed agricultural machine (10) having at least one sensor (48, 50, 54, 56) which makes available a signal which contains information about a noise which is caused by an element of the machine (10) which is driven in rotation, and having a computer device (46) which receives the signal of the sensor (48, 50, 54, 56) and assigns the signal made available by at least one of the sensors (48, 50, 54, 56) to an element of the machine (10), and generates a signal value on the basis of the signal made available by the sensor (48, 50, 54, 56) and a comparison value, **characterized in that** the computer device (46) receives signals from a rotational speed sensor (58) which is assigned to the rotating element (39) of the machine (10), **in that** the computer device (46) assigns a signal correlated to the rotational speed measured by the rotational speed sensor (58) to the rotating element (39), and **in that** the computer device (46) outputs a fault indication in the event of a deviation of a parameter of the signal of the sensor (48, 50, 54, 56) from the comparison value by more than a threshold value.

## Revendications

1. Machine de travail (10) agricole automotrice, portée ou tirée, comprenant au moins un élément (39) entraîné par rotation et un dispositif de contrôle pour surveiller la fonction de la machine de travail (10), le dispositif de contrôle présentant au moins un capteur (48, 50, 54, 56), qui est aménagé pour fournir un signal qui contient une information concernant un bruit provoqué par l'élément entraîné de la machine de travail (10), et présente un ordinateur (46) recevant le signal du capteur (48, 50, 54, 56), qui peut être utilisé de façon à attribuer le signal fourni par au moins l'un des capteurs (48, 50, 54, 56) à un élément de la machine de travail (10) et pour générer une valeur de signal à l'aide du signal fourni par le capteur (48, 50, 54, 56) et d'une valeur de comparaison, **caractérisée en ce que** l'ordinateur (46) reçoit des signaux d'un capteur de régime (58) qui est attribué à l'élément (39) rotatif de la machine de travail (10), **en ce que** l'ordinateur (46) attribue un signal corrélé avec le régime mesuré par le capteur de régime (58) à l'élément (39) rotatif, et **en ce que** l'ordinateur (46) peut être utilisé pour délivrer un affichage d'erreur dans le cas d'un écart, situé au-dessus d'une valeur seuil, d'un paramètre du signal de capteur (48, 50, 54, 56) par rapport à la valeur de comparaison.

2. Machine de travail (10) selon la revendication 1, **caractérisée en ce que** l'élément entraîné est un élément de traitement de produit et/ou un élément de transport de produit.

3. Machine de travail (10) selon la revendication 1 ou 2, **caractérisée en ce que** le capteur (48, 50, 54, 56) est un capteur acoustique ou un capteur de mouvement.

4. Machine de travail (10) selon l'une quelconque des revendications 1 à 3, **caractérisée en ce que** le capteur (48, 50, 54, 56) est placé sur une partie, reliée mécaniquement directement ou indirectement à l'élément, de la machine de travail agricole (10), des bruits et/ou des déplacements et/ou des vibrations de l'élément étant transmis de façon acoustique et/ou mécanique au capteur.

5. Machine de travail (10) selon l'une quelconque des revendications 1 à 4, **caractérisée en ce que** l'ordinateur (46) peut être utilisé pour délivrer un affichage d'erreur dans le cas d'un écart, situé au-dessus d'une valeur seuil, de la fréquence et/ou de l'amplitude du signal du capteur (48, 50, 54, 56) par rapport à la valeur de comparaison.

6. Machine de travail (10) selon l'une quelconque des revendications 1 à 5, **caractérisée en ce que** la valeur de comparaison correspond à une machine de travail (10) parfaite.

7. Machine de travail (10) selon l'une quelconque des revendications 1 à 6, **caractérisée en ce que** la valeur de comparaison correspond à une machine de travail (10) défectueuse.

8. Dispositif de contrôle selon l'une quelconque des revendications 1 à 7, **caractérisé en ce que** l'ordinateur (46) peut être utilisé pour attribuer le signal à l'élément respectif de la machine de travail (10) à l'aide de la position du capteur (48, 50, 54, 56).

9. Machine de travail (10) selon l'une quelconque des revendications 1 à 8, **caractérisée en ce que** l'ordinateur (46) peut être utilisé pour éditer une information pour savoir à quel élément une erreur doit être attribuée.

10. Machine de travail (10) selon l'une quelconque des revendications 1 à 9, **caractérisée en ce que** les valeurs de comparaison des signaux sont enregistrées par le capteur (48, 50, 54, 56) et peuvent être stockées par l'ordinateur (46).

11. Procédé pour surveiller la fonction d'une machine de travail (10) agricole automotrice, portée ou tirée, comprenant au moins un capteur (48, 50, 54, 56) qui fournit un signal contenant une information concernant un bruit provoqué par un élément, entraîné de façon rotative, de la machine de travail (10), et un ordinateur (46) recevant le signal du capteur (48, 50, 54, 56), qui attribue le signal fourni par au moins l'un des capteurs (48, 50, 54, 56) à un élément de la machine de travail (10) et génère une valeur de signal à l'aide du signal fourni par le capteur (48, 50, 54, 56) et d'une valeur de comparaison, **caractérisé en ce que** l'ordinateur (46) reçoit des signaux d'un capteur de régime (58) qui est attribué à l'élément (39) rotatif de la machine de travail (10), **en ce que** l'ordinateur (46) attribue un signal corrélé avec le régime mesuré par le capteur de régime (58) à l'élément (39) rotatif, et **en ce que** l'ordinateur (46) délivre un affichage d'erreur dans le cas d'un écart, situé au-dessus d'une valeur seuil, d'un paramètre du signal du capteur (48, 50, 54, 56) par rapport à la valeur de comparaison.
